(19) **Europäisches Patentamt**

**European Patent Office**

**Office européen des brevets**

(11) **EP 0 866 485 B1**

(12) **FASCICULE DE BREVET EUROPEEN**

(45) Date de publication et mention
de la délivrance du brevet:
**28.12.2005 Bulletin 2005/52**

(51) Int Cl.[7]: **H01H 73/00**, H02H 6/00

(21) Numéro de dépôt: **98410018.0**

(22) Date de dépôt: **27.02.1998**

(54) **Dispositif de protection d'un moteur avec une fonction signal défaut thermique avancé à la manoeuvre**

Schutzvorrichtung für einen elektrischen Motor mit Fehlersignalisierung vor Aktivierung

Protection device for an electric motor with thermal fault signalling before activation

(84) Etats contractants désignés:
**DE ES GB IT**

(30) Priorité: **19.03.1997 FR 9703569**

(43) Date de publication de la demande:
**23.09.1998 Bulletin 1998/39**

(73) Titulaire: **SCHNEIDER ELECTRIC INDUSTRIES SAS**
**92500 Rueil-Malmaison (FR)**

(72) Inventeurs:
• **Nguyen, Hong**
**38050 Grenoble cedex 09 (FR)**
• **Perron, Patrick**
**38050 Grenoble cedex 09 (FR)**

(74) Mandataire: **Jouvray, Marie-Andrée et al**
**Schneider Electric SA,**
**Sce. Propriété Industrielle, - A7**
**38050 Grenoble Cedex 09 (FR)**

(56) Documents cités:
**EP-A- 0 135 870** **DE-A- 3 432 476**
**FR-A- 2 043 743**

# Description

L'invention concerne un dispositif de protection d'un moteur alimenté par un réseau électrique par l'intermédiaire d'un disjoncteur en série avec un contacteur, dispositif comportant des moyens de mesure du courant d'alimentation du moteur, un déclencheur connecté aux moyens de mesure et comportant des premiers moyens pour produire, en cas de surcharge, un signal d'ouverture du contacteur et des seconds moyens pour produire ensuite, si la surcharge subsiste pendant une période prédéterminée après le signal d'ouverture du contacteur, un signal de déclenchement pour l'ouverture du disjoncteur.

Dans la protection des moteurs on prévoit généralement un disjoncteur en série avec un contacteur. Le disjoncteur assure la protection contre les surcharges et les court-circuits. Le contacteur est conçu de manière à permettre la commande, manuelle ou à distance, du moteur. Les contacts d'un disjoncteur sont prévus pour un nombre d'ouvertures très inférieur à ceux d'un contacteur. Pour limiter l'usure du disjoncteur et permettre une tentative de redémarrage automatique du moteur lors de la détection d'une surcharge dans l'alimentation du moteur, il est connu de prévoir une fonction appelée fonction signal défaut thermique avancé à la manoeuvre, ou fonction SDTAM. Cette fonction SDTAM consiste, lorsqu'une surcharge, représentative d'un défaut thermique, est détectée, à ouvrir d'abord le contacteur, 500ms avant l'instant prévu pour le déclenchement correspondant. L'ouverture du contacteur interrompant l'alimentation du moteur, la surcharge disparaît et il devient inutile d'ouvrir le disjoncteur. Par contre, si le courant d'alimentation n'est pas interrompu par le contacteur, la surcharge continue à être détectée et un signal de déclenchement est produit.

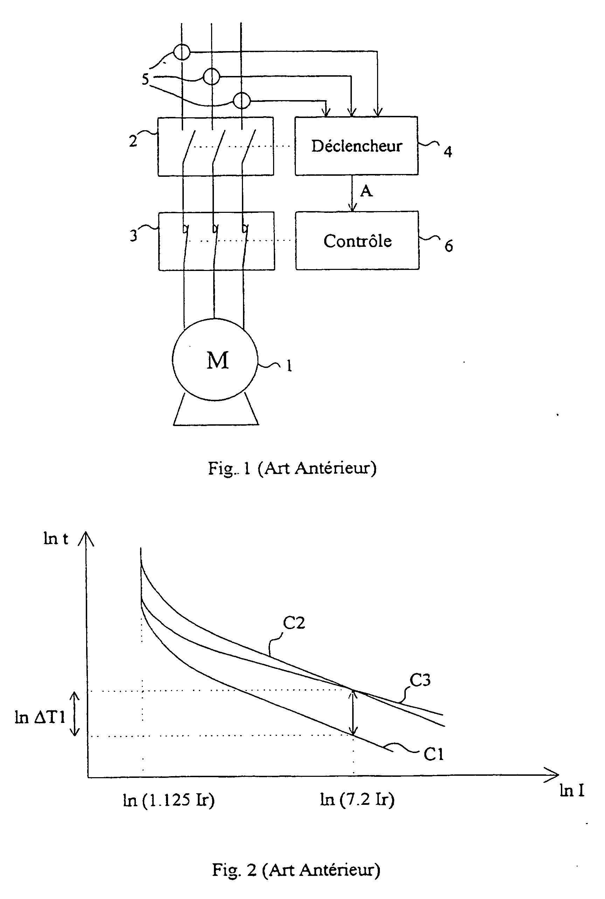

Dans les dispositifs connus, qui seront explicités plus en détail en relation avec les figures 1 à 3, la courbe de déclenchement commandant l'ouverture du disjoncteur en cas de surcharge est modifiée par la fonction SDTAM.

L'invention a pour but un dispositif de protection moteur dans lequel la fonction de protection contre les surcharges n'est pas modifiée par l'addition d'une fonction SDTAM.

Selon l'invention, ce but est atteint par le fait que les seconds moyens comportent des moyens de détermination d'une première grandeur représentative du carré du courant mesuré, des premiers moyens de traitement connectés aux moyens de détermination pour déterminer une seconde grandeur représentative de l'état thermique du moteur et des premiers moyens de comparaison pour comparer la seconde grandeur à un seuil de déclenchement prédéterminé, de manière à réaliser une fonction de protection temps/courant prédéterminée, les premiers moyens comportant des seconds moyens de traitement, connectés à la sortie des moyens de détermination de la première grandeur et des premiers moyens de traitement, pour déterminer une troisième grandeur, et des seconds moyens de comparaison pour comparer la troisième grandeur au seuil de déclenchement et fournir le signal d'ouverture du contacteur lorsque la troisième grandeur atteint ou dépasse ledit seuil.

Il est ainsi possible, sans modifier les fonctions de déclenchement d'un disjoncteur destiné à la protection d'un moteur, de lui adjoindre la fonction SDTAM.

D'éventuelles perturbations du courant d'alimentation du moteur peuvent néanmoins conduire à une modification de la période séparant le signal d'ouverture du contacteur du signal de déclenchement associé.

Selon une variante de l'invention, le problème additionnel dû à de telles perturbations est résolu par le fait que le dispositif comporte des moyens de temporisation connectés à la sortie des seconds moyens de comparaison et un circuit OU comportant une première entrée connectée à la sortie des premiers moyens de comparaison et une seconde entrée connectée à la sortie des moyens de temporisation, le signal de déclenchement étant fourni à la sortie du circuit OU.

D'autres avantages et caractéristiques ressortiront plus clairement de la description suivante de différents modes de réalisation de l'invention, donnés à titre d'exemples non limitatifs et représentés aux dessins annexés dans lesquels :

La figure 1 représente un dispositif de protection moteur comportant une fonction SDTAM selon l'art antérieur,

La figure 2 illustre les courbes de déclenchement du dispositif selon la figure 1,

La figure 3 représente plus en détail le déclencheur du dispositif selon la figure 1.

La figure 4 représente plus en détail un mode de réalisation particulier des moyens de réalisation de la fonction de déclenchement long retard d'un déclencheur dans lequel l'invention peut être appliquée.

La figure 5 représente un mode de réalisation particulier des moyens de réalisation de la fonction SDTAM selon l'invention,

La figure 6 illustre les variations en fonction du temps, des grandeurs θ2 et θ3 de la figure 5.

La figure 7 représente les courbes de déclenchement du dispositif selon la figure 5.

La figure 8 illustre une partie des courbes de la figure 6 lorsque les courants d'alimentation du moteur sont perturbés.

La figure 9 représente une variante de réalisation de l'invention permettant de surmonter les problèmes dus aux perturbations illustrées à la figure 8.

Sur la figure 1, un moteur 1 est alimenté par un réseau électrique triphasé, par l'intermédiaire d'un disjoncteur 2 en série avec un contacteur 3. Le dispositif de protection comporte un déclencheur 4. Celui-ci réalise diverses fonctions de protection contre les surcharges et les court-circuits, et plus particulièrement une fonction de protection long retard destinée à provoquer l'ouverture du disjoncteur lorsque le courant d'alimentation du moteur mesuré par des transformateurs de courant 5, dépasse un seuil long retard prédéterminé pendant une période prédéterminée.

Le déclencheur 4 réalise également la fonction SDTAM et fournit un signal A d'ouverture à un circuit 6 de contrôle du contacteur. Un signal de déclenchement, provoquant l'ouverture du disjoncteur 2 n'est produit que si la surcharge persiste pendant une période ($\Delta$T1) prédéterminée après le signal A d'ouverture du contacteur. En fonctionnement normal ,une surcharge provoque donc l'ouverture du contacteur. Si celui-ci s'ouvre, la surcharge disparaît et le déclencheur ne provoque pas l'ouverture du disjoncteur 2. Le contacteur peut alors être fermé soit manuellement, soit automatiquement pour une tentative de redémarrage du moteur.

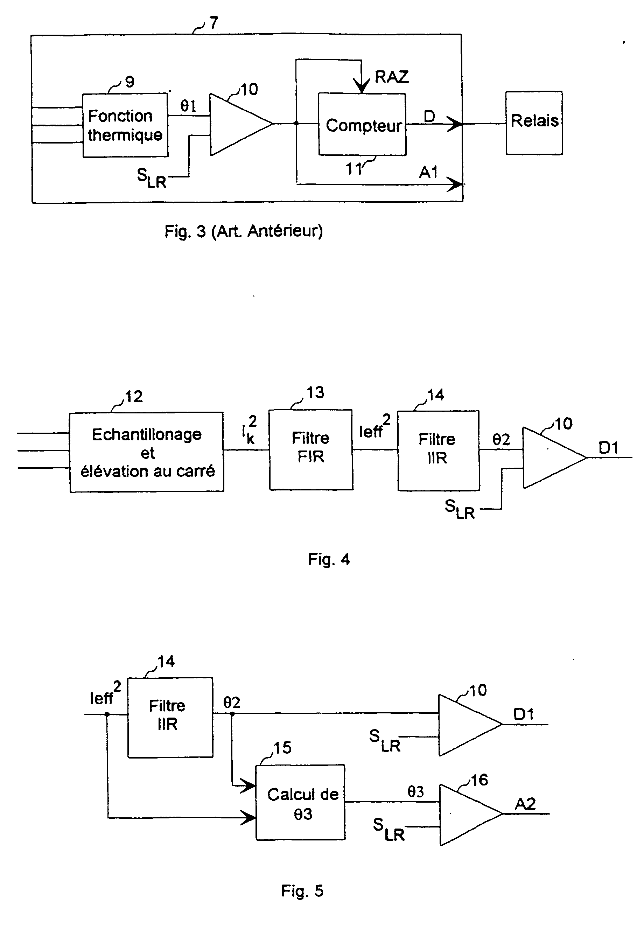

Dans les dispositifs connus, le déclencheur 4 utilise, pour réaliser la fonction SDTAM, une courbe de déclenchement C1 (figure 2) obtenue par simple décalage de la courbe de déclenchement C2 initiale de la fonction long retard. La figure 3 représente un déclencheur connu comportant la fonction SDTAM. Le déclencheur comporte un circuit de traitement 7 connecté aux transformateurs de courant 5 et comportant une première sortie connectée à un relais 8 provoquant l'ouverture du disjoncteur 2 lorsqu'un signal D de déclenchement lui est appliqué. Le circuit de traitement 7 comporte une seconde sortie connectée au circuit 6 de contrôle du contacteur et provoquant l'ouverture du contacteur lorsqu'un signal A1 d'ouverture du contacteur est produit.

Le circuit de traitement comporte un circuit 9 réalisant une fonction thermique et produisant une grandeur θ1. La grandeur θ1 est comparée à un seuil long retard $S_{LR}$, correspondant de préférence à $(1, 125Ir)^2$, par un comparateur 10. Celui-ci fournit en sortie le signal A1 d'ouverture du contacteur lorsque θ1 dépasse le seuil $S_{LR}$. La sortie du comparateur 10 est connectée à l'entrée d'un compteur 11 qui introduit une temporisation égale à la période $\Delta$T1 entre son entrée et sa sortie. La sortie du comparateur 10 est également connectée à une entrée (RAZ) de remise à zéro du compteur 11. Lorsque θ1 dépasse le seuil $S_{LR}$, un signal A1 non nul est produit qui provoque l'ouverture du contacteur 3 et le début du comptage par le compteur 11. L'ouverture du contacteur 3 fait repasser à zéro la grandeur θ1 et, en conséquence, le signal A1. Le front de descente de A1 remet à zéro le compteur 11 de sorte qu'aucun signal D n'est produit. Si le contacteur ne s'ouvre pas, par exemple par collage ou court-circuit de ses contacts ou en raison d'un défaut dans son circuit de contrôle ou d'une défaillance dans la liaison entre le déclencheur 4 et le circuit de contrôle 6 ou dans la liaison entre le circuit de contrôle 6 et le contacteur 3, le comptage continue si la surcharge persiste et un signal D de déclenchement est produit après la période $\Delta$T1.

Dans les déclencheurs connus, les fonctions des circuits 9 et 10 peuvent être réalisées par un bilame traversé par un courant représentatif du courant d'alimentation du moteur. Le circuit 9 peut éventuellement être constitué par un élément thermique.

Comme représenté à la figure 2, dans le dispositif connu selon la figure 3, la courbe C1 obtenue au moyen d'un bilame est du même type que la courbe de déclenchement initiale C2 du déclencheur. Ir étant le courant de réglage du déclencheur, une telle courbe représente, en coordonnées logarithmiques, les variations du temps en fonction du courant. En dessous d'un seuil de déclenchement prédéterminé, conventionnellement compris entre 1,05Ir et 1,2Ir, de préférence égal à 1,125Ir, on considère qu'il n'y a pas surcharge. Les normes actuelles préconisent de plus un temps de déclenchement maximum prédéterminé pour une valeur prédéterminée du courant égale à 7,2Ir. Sur la figure 2 le décalage suivant l'axe des temps entre les courbes C1 et C2 est tel que les courbes sont séparées par λnΔT1 pour une valeur du courant de 7,2Ir. Les courbes C1 et C2 étant parallèles en coordonnées logarithmiques, pour une valeur donnée du courant, leurs instants de déclenchement ne sont en fait séparés par la période $\Delta$T1 que pour 7,2Ir. La courbe C3 représente la courbe de déclenchement réelle obtenue en sortie du compteur 11 lorsque le circuit de calcul 9 utilise la courbe C1.

La courbe C1 peut être représentée par une équation de la forme :

$$t_{d1} = \tau 1 n \left( \cfrac{1}{1 - \cfrac{S_{LR}}{I^2}} \right) \qquad (1)$$

où $\tau$1 est une constante de temps prédéterminée et $t_{d1}$ représente le temps de déclenchement de la fonction SDTAM.

La courbe C3 est alors obtenue par :

$$t_{d2} = t_{d1} + \Delta T1 \qquad (2)$$

où $t_{d2}$ représente le temps de déclenchement de la fonction long retard réellement réalisée. Le signal SDTAM apparaît donc bien systématiquement $\Delta$T1=0,5s avant l'ordre de déclenchement associé.

Cependant, l'équation (2) peut s'écrire :

$$t_{d2} = \tau 1(\ell n \frac{1}{1 - \frac{S_{LR}}{I^2}}) + \Delta T1 \qquad (3)$$

Une telle fonction ne peut pas représenter le modèle thermique du moteur du fait de la présence de la constante $\Delta T1$.

Ainsi, comme cela ressort également de la figure 2, la courbe C3 est différente de la courbe C2 initialement prévue qui est du type :

$$t_{d2} = \tau 2 \ell n(\frac{1}{1 - \frac{S_{LR}}{I^2}}) \qquad (4)$$

avec $\tau 2 \neq \tau 1$

Cette modification introduite par la fonction SDTAM n'est pas souhaitable et l'invention a pour but d'éviter cet inconvénient.

La figure 4 illustre un mode de réalisation particulier du circuit de traitement d'un déclencheur long retard en relation avec lequel l'invention sera décrite ultérieurement. Le mode de réalisation particulier de la figure 4 a été décrit dans la demande de brevet français n° 96 16 152 de la demanderesse, déposée le 23/12/1996, qui est incorporée par référence dans la présente demande. Il comporte un circuit 12 d'échantillonnage et d'élévation au carré recevant les signaux de courant des transformateurs de mesure 5. Les carrés $I_k^2$ des échantillons de courant sont appliqués à l'entrée d'un filtre numérique 13 à réponse impulsionnelle finie, ou filtre FIR. Les signaux de sortie du filtre FIR 13 sont représentatifs du carré $Ieff^2$ de la valeur efficace du courant d'alimentation du moteur. Un filtre numérique 14 à réponse impulsionnelle infinie, ou filtre IIR, est connecté en série avec le filtre FIR. Le filtre IIR 14 reçoit en entrée les signaux $Ieff^2$ et fournit en sortie une grandeur $\theta 2$ représentative de l'état thermique du moteur. Cette grandeur $\theta 2$ est comparée au seuil $S_{LR}$ par le comparateur 10 qui fournit un signal de déclenchement D1 lorsque $\theta 2$ est supérieur ou égal au seuil $S_{LR}$.

Selon l'invention, la fonction SDTAM est ajoutée sans modifier la détermination de la grandeur $\theta 2$ et, en conséquence, la production du signal de déclenchement D1, conformément à une courbe de déclenchement prédéterminée C2. Sur la figure 5 seules les parties nécessaires à la compréhension ont été représentées.

Dans le mode de réalisation de la figure 5, le carré $Ieff^2$ de la valeur efficace du courant est, comme précédemment, appliqué à l'entrée du filtre IIR 14 et la grandeur $\theta 2$ de sortie du filtre 14 est comparée par le comparateur 10 au seuil $S_{LR}$ pour fournir un signal de déclenchement conformément à la courbe C2 de déclenchement. Le déclencheur comporte, de plus, un circuit 15 de calcul d'une grandeur $\theta 3$. Le circuit 15 reçoit en entrée les signaux $Ieff^2$ et $\theta 2$. La grandeur $\theta 3$ est ensuite comparée au seuil $S_{LR}$ par un comparateur 16 qui fournit un signal A2 de commande d'ouverture du contacteur.

Dans le mode particulier de réalisation représenté, la grandeur $\theta 2$, fonction du temps et du courant, est obtenue conformément à une équation de la forme :

$$\theta 2 = Ieff^2(1 - e^{-t/\tau}) \qquad (5)$$

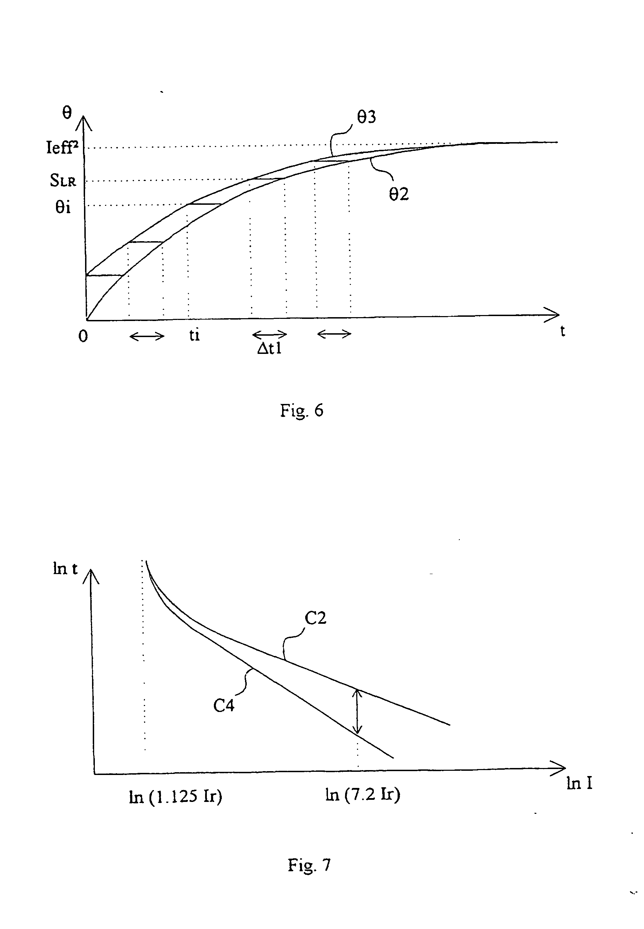

dans laquelle t représente le temps et $\tau$ une constante de temps prédéterminée représentative de la fonction de protection correspondant à la courbe de déclenchement C2 des figures 2 et 7. La courbe C2 répond à l'équation (4) ci-dessus, avec $\tau = \tau 2$. Les variations de $\theta 2$ en fonction du temps pour un courant Ieff prédéterminé, sont illustrées à la figure 6.

La grandeur $\theta 3$ est calculée de manière à correspondre à chaque instant à un signal en avance de $\Delta T1$ par rapport à $\theta 2$, c'est à dire à répondre une équation de la forme :

$$\theta 3 = Ieff^2(1 - e^{-(t + \Delta T1)/\tau}) \qquad (6)$$

La courbe représentant les variations de $\theta 3$ en fonction du temps t pour un courant efficace Ieff prédéterminé est illustrée à la figure 6. L'équation (6) peut s'écrire sous la forme :

$$\theta 3 = Ieff^2 - (Ieff^2 - \theta 2)e^{-(\Delta T1)/\tau} \qquad (7)$$

$\Delta T1$ et $\tau$ étant des constantes prédéterminées, le calcul de $\theta 3$ peut s'effectuer très rapidement à partir des vlaeurs de $Ieff^2$ et $\theta 2$ qui sont déjà disponibles, en éliminant la variable temps. Il est à noter que dans le dispositif connu (fig.3) l'utilisation du circuit 9 ne permettait pas de disposer de la valeur efficace du courant.

En règle générale, $\Delta T1 = 0,5s$ et $\tau$ est très grand, de l'ordre de 100 à 200s, vis à vis de $\Delta T1$. Le coefficent $e^{-\Delta T1/\tau}$ est alors très petit et peut être assimilé à $1 - \Delta T1/\tau$. L'équation (7) peut alors être simplifiée et remplacée par une équation de la forme :

$$\theta 3 = \theta 2 + \Delta T1(Ieff^2 - \theta 2)/\tau \qquad (8)$$

Les courbes de déclenchement C2 et C4 respectivement obtenues avec les signaux D1 et A2 de la figure 5 sont représentées à la figure 7. La courbe de déclenchement C2 est la courbe désirée et, comme représenté à la figure 6, le signal $\theta 3$ est en permanence en avance de $\Delta T1$ vis à vis du signal $\theta 2$ de sorte que le signal A2 atteint le seuil $S_{LR}$ avec une avance de $\Delta T1$ par rapport à D1, quelle que soit la valeur du courant.

Dans un mode de réalisation préférentiel, le déclencheur est un déclencheur à propre courant, c'est à dire alimenté par les capteurs de courant. Dans un tel cas, l'interruption du courant par ouverture du contacteur 3 provoque l'interruption de l'alimentation du déclencheur et, automatiquement la remise à zéro du signal D1.

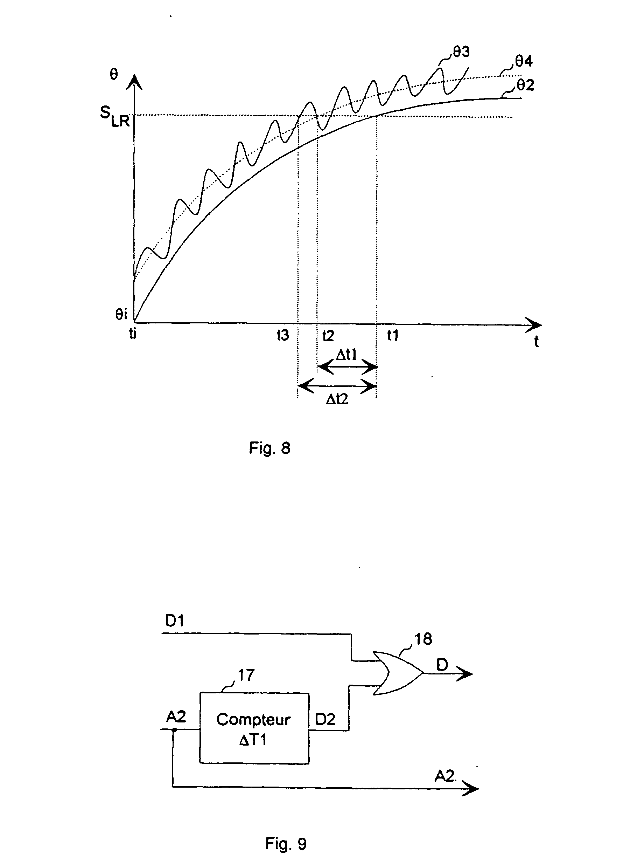

Si le courant d'alimentation du moteur est perturbé, il peut y avoir oscillation du signal θ3, notamment dans la zone de la courbe de déclenchement proche du seuil de déclenchement $S_{LR}$ où le temps de déclenchement est très grand. De telles oscillations lorsque θ3 atteint le seuil de déclenchement altèrent la période séparant les signaux A2 et D1. Cette altération est illustrée sur la figure 8 où la courbe θ3 oscille autour de la courbe théorique θ4 qu'elle devrait prendre conformément à la figure 6. Ainsi, si une période ΔT1 sépare effectivement les instants t1 où θ2 atteint le seuil $S_{LR}$ et t2 où θ4 aurait dû l'atteindre, la courbe θ3 atteint en réalité ce seuil à un instant t3, qui sur la figure est situé avant t2. La période ΔT2 séparant l'émission du signal A2, en t3, de l'émission éventuelle du signal de déclenchement D2, en t1, est alors supérieure à la période ΔT1 voulue.

Selon le mode de réalisation préférentiel de l'invention représenté à la figure 9, un compteur 17 est connecté à la sortie du comparateur 16 de la figure 5. Le compteur 17 introduit la temporisation ΔT1 et produit en réponse à un signal A2 un signal D2 après la temporisation ΔT1. Les signaux D1 et D2 sont appliqués à des entrées respectives d'un circuit logique OU 18, dont la sortie fournit le signal de déclenchement D appliqué au relais 8 et ouverture du disjoncteur 2.

Ainsi, si les signaux de courant ne sont pas perturbés, le signal de déclenchement D correspond au signal D1 qui correspond exactement à la courbe de déclenchement C2 prédéterminée voulue. Par contre, dans la zone de la courbe de déclenchement qui est proche du seuil de déclenchement, une perturbation éventuelle des courants provoque une altération de la courbe de déclenchement C2 pour assurer le maintien de la période ΔT1 entre les signaux A2 et D.

Comme précédemment les signaux D1, D2 et D ne sont en réalité produits que si le signal A2 ne provoque pas l'ouverture du contacteur et l'interruption de l'alimentation du moteur. Sinon, cette interruption provoque l'interruption de l'alimentation, à propre courant, du déclencheur et, en particulier, du compteur 17 et du circuit OU 18.

Dans certaines applications, le signal A2 peut être utilisé pour fournir une alarme ou pour indiquer que le défaut est un défaut de type thermique, c'est à dire dû à une surcharge.

Un microprocesseur peut réaliser, en totalité ou en partie, les fonctions des filtres 13 et 14, des circuits d'élévation ou carré, de calcul (15) et des comparateurs (10, 16).

**Revendications**

1. Dispositif de protection d'un moteur (1) alimenté par un réseau électrique par l'intermédiaire d'un disjoncteur (2) en série avec un contacteur (3), dispositif comportant des moyens (5) de mesure du courant d'alimentation du moteur, un déclencheur (4) connecté aux moyens de mesure et comportant des premiers moyens pour produire, en cas de surcharge, un signal (A, A1, A2) d'ouverture du contacteur (3) et des seconds moyens pour produire ensuite, si la surcharge subsiste pendant une période prédéterminée (ΔT1) après le signal d'ouverture du contacteur, un signal (D, D1) de déclenchement pour l'ouverture du disjoncteur, dispositif **caractérisé en ce que** les seconds moyens comportent des moyens (12, 13) de détermination d'une première grandeur ($Ieff^2$) représentative du carré du courant mesuré, des premiers moyens de traitement (14) connectés aux moyens de détermination (12, 13) pour déterminer une seconde grandeur (θ2) représentative de l'état thermique du moteur (1) et des premiers moyens (10) de comparaison pour comparer la second grandeur (θ2) à un seuil de déclenchement ($S_{LR}$) prédéterminé, de manière à réaliser une fonction de protection temps/courant (C2) prédéterminée, les premiers moyens comportant des seconds moyens de traitement (15), connectés à la sortie des moyens de détermination de la première grandeur ($Ieff^2$) et à la sortie des premiers moyens de traitement (14), pour déterminer une troisième grandeur (θ3), et des seconds moyens (16) de comparaison pour comparer la troisième grandeur (θ3) au seuil de déclenchement ($S_{LR}$) et fournir le signal (A2) d'ouverture du contacteur lorsque la troisième grandeur (θ3) atteint ou dépasse ledit seuil.

2. Dispositif selon la revendication 1, **caractérisé en ce que** les premiers moyens de traitement (14) déterminent la seconde grandeur (θ2) conformément à une première équation de la forme :

$$\theta2= Ieff^2(1-e^{-t/\tau})$$

dans laquelle $Ieff^2$ constitue la première grandeur, représentative du carré de la valeur efficace du courant mesuré, t le temps et τ une constante de temps prédéterminée représentative de la fonction de protection (C2).

3. Dispositif selon la revendication 2, **caractérisé en ce que** les seconds moyens de traitement (15) déterminent la troisième grandeur (θ3) conformément à une seconde équation de la forme :

$$\theta3 = Ieff^2 - (Ieff^2 - \theta2)e^{-\Delta T1/\tau}$$

dans laquelle ΔT1 est ladite période prédéterminée séparant un signal (A, A1, A2) d'ouverture du contacteur d'un éventuel signal de déclenchement (D) associé.

4. Dispositif selon la revendication 2, **caractérisé en ce que** la constante de temps τ étant élevée, les seconds moyens de traitement (15) déterminent la troisième grandeur (θ3) conformément à une troisième équation de la forme :

$$\theta3 = \theta2 + \Delta T1(\text{Ieff}^2 - \theta2) / \tau$$

dans laquelle ΔT1 est ladite période prédéterminée séparant un signal (A, A1, A2) d'ouverture du contacteur d'un éventuel signal de déclenchement (D) associé.

5. Dispositif selon l'une quelconque des revendications précédentes, **caractérisé en ce que** les moyens de détermination de la première grandeur comportent des moyens (12) d'échantillonnage et d'élévation au carré des signaux de courant fournis par les moyens (5) de mesure du courant, et un filtre à réponse impulsionnelle finie (13).

6. Dispositif selon la revendication 5, **caractérisé en ce que** les premiers moyens de traitement (14) comportent un filtre à réponse impulsionnelle infinie.

7. Dispositif selon l'une quelconque des revendications précédentes, **caractérisé en ce qu'**il comporte des moyens de temporisation (17) connectés à la sortie des seconds moyens (16) de comparaison et un circuit OU (18) comportant une première entrée connectée à la sortie des premiers moyens (10) de comparaison et une seconde entrée connectée à la sortie des moyens de temporisation (17), le signal de déclenchement (D) étant fourni à la sortie du circuit OU (18).

8. Dispositif selon la revendication 7, **caractérisé en ce que** les moyens de temporisation (17) sont constitués par un compteur.

**Patentansprüche**

1. Schutzeinrichtung für einen Motor (1), der über einen Leistungsschalter (2) und ein in Reihe dazu geschaltetes Schütz (3) aus einem elektrischen Leitungsnetz gespeist wird, welche Einrichtung Messmittel (5) zur Messung des Motor-Versorgungsstroms, einen an die Messmittel angeschlossenen Auslöser (4) mit ersten Mitteln zur Erzeugung eines Signals (A, A1, A2) zur Abschaltung des Schützes (3) im Überlastfall sowie mit zweiten Mitteln zur anschließenden Erzeugung eines Auslösesignals (D, D1) zur Abschaltung des Leistungsschalters bei Fortbestehen der Überlast über eine bestimmte Zeitspanne (ΔT1) nach Erzeugung des Schütz-Abschaltsignals, **dadurch gekennzeichnet, dass** die zweiten Mittel Bestimmungsmittel (12, 13) zur Bestimmung einer, das Quadrat des gemessenen Stroms abbildenden ersten Größe (Ieff²), mit den Bestimmungsmitteln (12, 13) verbundene erste Verarbeitungsmittel (14) zur Bestimmung einer den thermischen Zustand des Motors abbildenden zweiten Größe (θ2) sowie erste Vergleichsmittel (10) zum Vergleich der zweiten Größe (θ2) mit einem bestimmten Auslöse-Ansprechwert ($S_{LR}$) umfasst, derart dass eine bestimmte Zeit/Strom-Schutzfunktion (C2) realisiert wird, wobei die ersten Mittel an den Ausgang der Bestimmungsmittel zur Bestimmung der ersten Größe (Ieff²) und an den Ausgang der ersten Verarbeitungsmittel (14) angeschlossene zweite Verarbeitungsmittel (15) zur Bestimmung einer dritten Größe (θ3) sowie zweite Vergleichsmittel (16) umfassen, die dazu dienen, die dritte Größe (θ3) mit dem Auslöse-Ansprechwert ($S_{LR}$) zu vergleichen und das Signal (A2) zur Abschaltung des Schützes zu liefern, wenn die dritte Größe (θ3) den genannten Ansprechwert erreicht über überschreitet.

2. Einrichtung nach Anspruch 1, **dadurch gekennzeichnet, dass** die ersten Verarbeitungsmittel (14) die zweite Größe (θ2) entsprechend einer ersten Gleichung der Form

$$\theta2 = \text{Ieff}^2(1 - e^{-t/\tau})$$

bestimmen, wobei Ieff² die das Quadrat des Effektivwerts des gemessenen Stroms abbildende erste Größe, t die Zeit und τ eine bestimmte, die Schutzfunktion (C2) abbildende Zeitkonstante darstellen.

3. Einrichtung nach Anspruch 2, **dadurch gekennzeichnet, dass** die zweiten Verarbeitungsmittel (15) die dritte Größe (θ3) entsprechend einer zweiten Gleichung der Form

$$\theta3 = \text{Ieff}^2 - (\text{Ieff}^2 - \theta2)e^{-\Delta T1/\tau}$$

bestimmen, wobei ΔT1 die genannte bestimmte Zeitspanne zwischen einem Signal (A, A1, A2) zur Abschaltung des Schützes und einem gegebenenfalls erzeugten, zugeordneten Auslösesignal (D) darstellen.

4. Einrichtung nach Anspruch 2, **dadurch gekennzeichnet, dass** die Zeitkonstante τ hoch ist und die zweiten Verarbeitungsmittel (15) die dritte Größe (θ3) entsprechend einer dritten Gleichung der Form

$$\theta3=\theta2 + \Delta T1(Ieff^2 - \theta2) / \tau$$

bestimmen, wobei $\Delta T1$ die genannte bestimmte Zeitspanne zwischen einem Signal (A, A1, A2) zur Abschaltung des Schützes und einem gegebenenfalls erzeugten, zugeordneten Auslösesignal (D) darstellen.

5. Einrichtung nach irgendeinem der vorhergehenden Ansprüche, **dadurch gekennzeichnet, dass** die Mittel zur Bestimmung der ersten Größe Mittel zur Abtastung und Quadrierung (12) der von den Strommessmitteln 5 gelieferten Stromsignale sowie ein Filter mit endlicher Impulsantwort (13) umfassen.

6. Einrichtung nach Anspruch 5, **dadurch gekennzeichnet, dass** die ersten Verarbeitungsmittel (14) ein Filter mit unendlicher Impulsantwort umfassen.

7. Einrichtung nach irgendeinem der vorhergehenden Ansprüche, **dadurch gekennzeichnet, dass** sie mit dem Ausgang der zweiten Vergleichsmittel (16) verbundene Zeitverzögerungsmittel (17) sowie eine ODER-Schaltung (18) mit einem an den Ausgang der ersten Vergleichsmittel (10) angeschlossenen ersten Eingang und einem an den Ausgang der Zeitverzögerungsmittel (17) angeschlossenen zweiten Eingang umfasst, wobei das Auslösesignal (D) am Ausgang der ODER-Schaltung (18) bereitgestellt wird.

8. Einrichtung nach Anspruch 7, **dadurch gekennzeichnet, dass** die Zeitverzögerungsmittel (17) als Zähler ausgebildet sind.

## Claims

1. Protection device of a motor (1) supplied by an electric power system via a circuit breaker (2) in series with a contactor (3), device comprising means (5) for measuring the supply current of the motor, a trip unit (4) connected to the means for measuring and comprising first means for producing an opening signal (A, A1, A2) of the contactor (3) in the event of an overload, and second means for then producing a tripping signal (D, D1) for opening of the circuit breaker if the overload persists during a preset period ($\Delta T1$) after the opening signal of the contactor, device **characterized in that** the second means comprise means (12, 13) for determining a first quantity (Ieff$^2$ (Irms$^2$)) representative of the square of the measured current, first processing means (14) connected to the means for determining (12, 13) to determine a second quantity (θ2) representative of the thermal state of the motor (1), and first comparison means (10) to compare the second quantity (θ2) with a preset tripping threshold ($S_{LR}$) so as to perform a preset time/current protection function (C2), the first means comprising second processing means (15) connected to the output of the means for determining the first quantity (Ieff$^2$ (Irms$^2$)) and to the output of the first processing means (14) to determine a third quantity (θ3), and second comparison means (16) to compare the third quantity (θ3) with the tripping threshold ($S_{LR}$) and to supply the contactor opening signal (A2) when the third quantity (θ3) reaches or exceeds said threshold.

2. Device according to claim 1, **characterized in that** the first processing means (14) determine the second quantity (θ2) according to a first equation of the form:

$$\theta2 = Irms^2 (1- e^{-t/\tau})$$

in which Irms$^2$ constitutes the first quantity, representative of the square of the rms value of the measured current, t the time and τ a preset time constant representative of the protection function (C2).

3. Device according to claim 2, **characterized in that** the second processing means (15) determine the third quantity (θ3) according to a second equation of the form:

$$\theta3= Irms^2-(Irms^2-\theta2)e^{-(\Delta T1)/\tau}$$

in which $\Delta T1$ is said preset period separating an opening signal (A, A1, A2) of the contactor from a possible associated tripping signal (D).

4. Device according to claim 2, **characterized in that** the time constant τ being high, the second processing means (15) determine the third quantity (θ3) according to a third equation of the form:

$$\theta3=\theta2+\Delta T1(Irms^2 - \theta2)/\tau$$

in which $\Delta T1$ is said preset period separating an opening signal (A, A1, A2) of the contactor from a possible associated tripping signal (D).

5. Device according to any one of the foregoing claims, **characterized in that** the means for determining the first quantity comprise sampling and squaring means (12) of the current signals supplied by the current measuring means (5), and a finite impulse response filter (13).

6. Device according to claim 5, **characterized in that** the first processing means (14) comprise an infinite impulse response filter.

7. Device according to any one of the foregoing claims, **characterized in that** it comprises time delay means (17) connected to the output of the second comparison means (16) and an OR circuit (18) comprising a first input connected to the output of the first comparison means (10) and a second input connected to the output of the time delay means (17), the tripping signal (D) being supplied to the output of the OR circuit (18).

8. Device according to claim 7, **characterized in that** the time delay means (17) are constituted by a counter.

Fig. 1 (Art Antérieur)

Fig. 2 (Art Antérieur)

Fig. 3 (Art. Antérieur)

Fig. 4

Fig. 5

Fig. 6

Fig. 7

Fig. 8

Fig. 9